# EUROPEAN PATENT APPLICATION

(11) **EP 4 794 257 A1**
(43) Date of publication of application: **19.08.2026**
(21) Application number: 25158679.8
(22) Date of filing: 18.02.2025
(51) Int. Cl.: H04L 9/08, H04N 21/2347, H04N 21/254, H04N 21/4405, H04N 21/4627, H04N 21/6334, H04N 21/6408

(54) **SECURE MULTICAST TO UNICAST CONTENT CONVERSION**

(71) Applicant: Nagravision Sàrl, 1033 Cheseaux-sur-Lausanne (CH)
(72) Inventor: BUSSY, Jean-Luc, 1033 Cheseaux-sur-Lausanne (CH); THEVOZ, Thierry, 1033 Cheseaux-sur-Lausanne (CH)
(74) Representative: Novagraaf International SA

(57) **Abstract**

The present disclosure provides a method for unicast transmission of encrypted multicast content. An adapter receives the encrypted multicast content along with multicast content-related information (e.g., usage rules) and securely receives protection information from an entity associated with a DRM server. The adapter generates a content key token containing at least one content encryption key (CEK) and the with multicast content-related information (e.g., usage rules), using the protection information to protect confidentiality and authenticity of at least part of the token. The adapter transmits the content key token to a device, enabling the device to request a DRM license including the CEK from the DRM server. The adapter then transmits the content encrypted with the CEK to the device in unicast mode. The method enables secure conversion of multicast content to unicast while maintaining end-to-end security between content access systems and DRM systems.

## Description

### FIELD OF INVENTION

The present disclosure relates to content distribution systems, and more particularly to a system and method for securely converting encrypted multicast content to encrypted unicast content while maintaining end-to-end content protection.

### BACKGROUND

The distribution of paid TV programs has traditionally relied on two main technologies: broadcast, or multicast, transmission and unicast streaming. Broadcast or multicast transmission methods involve pushing the same content massively to many users in parallel, typically via satellite, cable networks, or fiber optic infrastructure. This approach allows efficient delivery of TV programs to a large audience simultaneously. Unicast streaming, on the other hand, delivers content individually to each user, enabling on-demand viewing but requiring more bandwidth and infrastructure resources.

Pay-TV operators generally use Conditional Access Systems (CAS) to restrict access to content in broadcast or multicast scenarios. The Conditional Access System ensures that only subscribed or authorized users can view specific channels or content by encrypting the signal and enabling them to decrypt the signal. The subscribed or authorized users are provided with specialized set-top boxes (STBs) that contain the hardware and software to decrypt content based on the user's subscription or authorization.

In unicast streaming scenarios, content providers typically rely on Digital Rights Management (DRM) systems to protect content. DRM technologies enable secure distribution and playback of digital content across various devices and platforms. These systems manage content encryption, license issuance, and access control to ensure that only authorized users can access, decrypt and playback the DRM-protected content.

Users' content consumption habits are continually evolving, with an increasing preference for multi-device viewing and on-demand access. In this context, operators need to adapt their existing broadcast or multicast infrastructure to support unicast streaming capabilities. The transition from broadcast, or multicast, transmission to unicast streaming is challenging for operators seeking to optimize costs and infrastructure utilization.

Recent initiatives have proposed to use existing broadcast delivery mechanisms while enabling local transformation and distribution to multiple devices using Over-The-Top (OTT) broadband content delivery. This approach aims to combine the efficiency of broadcast for content delivery with the flexibility of unicast streaming to multiple client devices. Standards such as DVB Home Broadcast have defined architectures for converting broadcast content to broadband (i.e., unicast content) within a home environment.

However, ensuring end-to-end security through the transition from multicast to unicast remains a challenge. The content protection mechanisms used for secure content delivery in broadcast or multicast scenarios, such as CAS systems, generally differ from those used in unicast streaming scenarios, typically relying on Digital Rights Management (DRM) systems. As a result, there are issues in maintaining the security, specifically for content encryption, access rights, and usage rules, throughout the transition from multicast to unicast.

Existing solutions often rely on basic authentication methods, such as device certificates, which may be vulnerable to extraction and unauthorized use. The security of the content key and associated usage rules during the transition from broadcast transmission to unicast streaming within the home network is a particular area of concern.

It has been appreciated that a secure content streaming system is needed that overcomes one or more of these problems.

### SUMMARY

This Summary is provided to introduce a selection of concepts in a simplified form that are further described below in the Detailed Description.

In a first aspect, the present disclosure concerns a method for unicast transmission of an encrypted multicast content, said method comprising the steps, performed by an adapter, of
- receiving the encrypted multicast content;
- securely receiving protection information from an entity associated with a DRM server;
- generating a content key token containing at least one content encryption key CEK, using the protection information to protect at least one part of the content key token in confidentiality, authenticity, or both (in other words, to protect one or more parts of the content key token in at least one of authenticity and confidentiality);
- transmitting the content key token to a device, enabling said device to request a DRM license including said content encryption key CEK to the DRM server; and
- transmitting in unicast the content encrypted with the content encryption key CEK to the device.

This method enables secure conversion of multicast content to unicast content while maintaining end-to-end security and digital rights management. The content key token serves as a secure container for the content encryption key (CEK) and other sensitive information, such as content usage rules. It is adapted for being included in a license request in order to receive a DRM license embedding this content encryption key CEK. The protection information received from the entity associated with the DRM server allows the adapter to protect the content key token, ensuring its confidentiality and authenticity, for example, through encryption and digital signatures applied to one or more parts of the content key token or the entire key token. This approach creates a trusted chain of communication from the multicast content provider through the adapter to the client device and DRM server. The client device can then use the content key token to request a DRM license, which includes the CEK necessary for decrypting the unicast content. This process maintains the security of the content encryption key throughout the transition from multicast to unicast, preventing unauthorized access or tampering. Additionally, by including content-related information like usage rules in the protected token, the method ensures that the DRM server can enforce the same access and usage restrictions that were originally applied to the multicast content, preserving the integrity of the content provider's distribution policies in the unicast environment.

In an embodiment, the method may further comprise receiving multicast content-related information, and, in the step of generating the content key token, said multicast content-related information is included in the content key token.

Advantageously, the multicast content-related information can include content usage rules defining conditions under which the content can be accessed and used.

Including multicast content-related information in the content key token allows for seamless transfer of important metadata and usage rules from the multicast domain to the unicast domain, ensuring consistent content management across different distribution methods.

By including content usage rules in the content key token, the method ensures that the same access and usage restrictions applied in the multicast domain are maintained when the content is delivered via unicast, preserving the content provider's intended usage policies.

In an embodiment, the method may further comprise a step of authenticating the adapter with the entity associated with the DRM server and a step of establishing a secure communication link between the adapter and said entity associated with the DRM server, the protection information being transmitted through the established secure communication link.

Authentication and secure communication between the adapter and the entity associated with the DRM server enhance the overall security of the system.

In a particular embodiment, the method may further comprise a step of generating the content encryption key CEK, that is different from a content key used to encrypt the multicast content.

Advantageously, the method further comprises a step of decrypting the encrypted multicast content and a step of re-encrypting the decrypted multicast content with the content encryption key CEK for unicast transmission.

Generating a new content encryption key for unicast transmission along with decrypting and re-encrypting the content may add an extra layer of security, as it prevents potential vulnerabilities associated with reusing the multicast encryption key in the unicast domain.

In an embodiment, the method may further comprise converting the content from a format used for multicast transmission to a format adapted for unicast transmission.

Converting the content format enables optimal delivery and playback on various client devices, improving compatibility and user experience in the unicast streaming environment.

The protection information may include at least one cryptographic key, for example two cryptographic keys including a first key for data encryption and a second key for digital signature.

**In** a second aspect, the present disclosure concerns a method of receiving an encrypted unicast content, said method comprising the steps, performed by the user device, of:
- receiving, from an adapter, the unicast content and a content key token, the unicast content being encrypted by at least one content encryption key CEK that is included in the content key token;
- generating a license request including said content key token;
- transmitting the license request to a DRM server;
- receiving from the DRM server the license including the content encryption key CEK;
- decrypting and rendering the content using the received DRM license

This method enables secure reception and playback of converted unicast content on the user device, maintaining end-to-end content protection and ensuring proper digital rights management.

In an embodiment, the method may further comprise the steps, performed by the user device, of:
- transmitting the content key token to an authorization service provider,
- in response, receiving a content authorization token ensuring that the user device is authorized to access said content,
wherein, in the step of generating the license request, said content authorization token is included in the license request.

Including an authorization step with a separate service provider ensures that only authorized users and devices can obtain the necessary licenses to decrypt and play the content.

Advantageously, the authorization service provider checks if the user device is authorized to access the content using a user database and, if the check is positive, generates the content authorization token.

In an embodiment, the content key token containing multicast content-related information, the authorization service provider extracts said multicast content-related information from the content key token and includes the extracted information in the content authorization token.

Extracting and transferring multicast content-related information to the content authorization token ensures that important metadata and usage rules are preserved throughout the authorization process, maintaining consistency between multicast and unicast content delivery.

In a third aspect, the present disclosure concerns an adapter device comprising:
- a receiver configured to receive an encrypted multicast content;
- a processing system;
- at least one memory storing instructions that, when executed by the processing system, cause the processing system to:
   securely receive protection information from an entity associated with a DRM server;
   generate a content key token containing at least one content encryption key CEK, using the protection information to protect at least one part of the content key token in confidentiality, authenticity, or both; and
- a transmitter configured to
   transmit the content key token to a device, enabling said device to request a DRM license including said content encryption key CEK to the DRM server; and
   transmit in unicast the content encrypted with the content encryption key CEK to the device.

This adapter device provides a hardware implementation for secure conversion of multicast content to unicast content, as defined in the claimed method.

In a fourth aspect, the present disclosure concerns a device comprising:
- a first communication interface configured to receive, from an adapter, a unicast content and a content key token, the unicast content being encrypted with at least one content encryption key CEK that is included in the content key token;
- at least one processor;
- at least one memory storing instructions that, when executed by the processor, cause the processor to generate a license request including said content key token;
- a second communication interface configured to transmit the license request to a DRM server and receive from the DRM server the license including the content encryption key CEK;
- a player (associated with a content decryption module) configured to decrypt and render the content using the received DRM license.

This device enables end users to securely receive and play converted unicast content, maintaining digital rights management and content protection throughout the process, as defined in the claimed method.

In a fifth aspect, the present disclosure concerns a system comprising the adapter device previously defined, a DRM server and an entity associated with the DRM server configured to securely provide protection information to the adapter device

The system may further comprise an authorization service provider configured to receive a content key token from a device, check if the device is authorized to access the content and, if the check is positive, generate a content authorization token and transmit said content authorization token to the device.

In an embodiment, the authorization service provider may be configured to extract multicast content-related information from the content key token and to include the extracted information in the content authorization token.

The system may further comprise at least one device for decrypting and rendering the content, as previously defined.

The present disclosure also concerns a computer program product comprising a non-transitory computer-readable medium storing instructions that, when executed by a processor of an adapter, cause the adapter to:
- receive an encrypted multicast content;
- securely receive protection information from an entity associated with a DRM server;
- generate a content key token containing at least one content encryption key CEK, using the protection information to protect at least one part of the content key token in confidentiality, authenticity, or both;
- transmit the content key token to a device, enabling said device to request a DRM license including said content encryption key CEK to the DRM server;
- transmit in unicast the content encrypted with the content encryption key CEK to the device.

The present disclosure further concerns a computer program product comprising a non-transitory computer-readable medium storing instructions that, when executed by a processor of a device, cause the user device to:
- receive, from an adapter, the encrypted unicast content encrypted with at least one content encryption key CEK and a content key token, the content key token containing the content encryption key CEK;
- generate a license request including said content key token;
- transmit the license request to a DRM server;
- receive from the DRM server the license including the content encryption key CEK;
- decrypt and render the content using the received DRM license.

### BRIEF DESCRIPTION OF FIGURES

Embodiments of the invention will be described, by way of example, with reference to the following drawings, in which:
Fig. 1 illustrates a block diagram of a content distribution system, according to aspects of the present disclosure.
Fig. 2 illustrates a flowchart of a method of multicast to unicast conversion, according to an embodiment.
Fig. 3A illustrates a flowchart showing a process of authentication and reception of protection information, according to an embodiment.
Fig. 3B illustrates a flowchart detailing a step for generating a content key token, according to an embodiment.
Fig. 3C illustrates a flowchart detailing a step for processing and transmitting encrypted content in unicast mode, according to an embodiment.
Fig. 4 illustrates a flowchart of a method of unicast reception and playback, according to an embodiment.
Fig. 5 illustrates a flowchart of a method for processing content authorization requests, according to an embodiment.
Fig. 6 illustrates a flowchart detailing a step for generating a content authorization token, according to an embodiment.
Fig. 7 illustrates a block diagram of an adapter module for converting encrypted multicast content to encrypted unicast content, according to aspects of the present disclosure.
Fig. 8 illustrates a block diagram of a user device, according to an embodiment.

Common reference numerals are used throughout the figures to indicate similar features.

### DETAILED DESCRIPTION

The present disclosure relates to a system and method for delivering in unicast a multicast content while maintaining an end-to-end security for access and usage of the content. This transition from multicast to unicast addresses a challenge of delivering encrypted multicast content to devices that may not be capable of receiving multicast transmissions or processing content access system (CAS) protections.

As used herein, the term "multicast" refers to a method of content distribution where the same data is transmitted simultaneously to multiple recipients. In the context of the present disclosure, multicast specifically relates to the transmission of content from a content provider to multiple receiving devices using a network infrastructure, such as cable, satellite, or internet. Multicast transmission allows for efficient use of network resources by sending a single stream of data that can be received by multiple authorized devices, rather than sending individual streams to each recipient.

As used herein, "multicast content" refers to digital content that is transmitted using multicast transmission methods. This content may be protected using a Content Access System (CAS) or similar technology to ensure that only authorized devices can decrypt and access the content.

As used herein, the term "unicast" refers to a method of transmitting data or content from a single sender to a single recipient over a network. In the context of the present disclosure, unicast transmission involves sending individualized streams of content from the adapter module to each authorized user device. This is in contrast to multicast transmission, where the same content is broadcast simultaneously to multiple recipients.

As used herein, "unicast content" refers to digital content that is transmitted using unicast transmission methods. In the present disclosure, the unicast content is derived from multicast content that has been converted by the adapter module for individualized transmission to a device. This content may be protected using a Digital Right Management (DRM) system to ensure that only authorized devices can access and/or use the content.

According to the present disclosure, a device - that will be referred as an adapter or adapter module - is configured to receive a multicast content and transmit it through unicast transmission to one or more user or client devices while maintaining protection measures on the content during the transition from multicast to unicast. In operation, the adapter securely obtains protection information, that may also be referred to as security data, from an entity associated with a DRM server. The adapter generates a content key token containing at least one content encryption key CEK. This content encryption key CEK is used to encrypt the content for unicast transmission. The content key token may include various types of information related to the content, such as usage rules associated with the multicast content. Using this protection information, the content key token or different parts of the content key token may be protected in confidentiality, authenticity, or both, depending on specific security requirements.

The adapter transmits the encrypted content to the user device using unicast transmission, typically in response to a request for the content from the device. The adapter also transmits the content key token to the device, enabling the device to request a DRM license from the DRM server. This process allows devices that are not equipped to handle multicast or CAS-protected content to receive and play the content while maintaining appropriate protections.

The content key token serves as a secure container for the content encryption key (CEK) and optionally other sensitive information, such as content usage rules. It is adapted for being included in a license request in order to receive a DRM license embedding this content encryption key CEK.

The adapter may execute an authentication process with the entity associated with the DRM server before establishing a secure communication link with this entity for transmission of the protection information. Alternatively, the authentication may involve a separate authentication entity distinct from the entity providing the protection information and from the DRM server.

The protection information provided to the adapter may include various elements such as one or more cryptographic keys, shared algorithms or other security parameters to ensure confidentiality, authenticity, or both, of at least part(s) of the content key token. This flexibility allows for adaptation to different security schemes and requirements.

In some aspects, the encrypted multicast content may be decrypted and re-encrypted using the content encryption key by the adapter, for unicast transmission.

In some implementations, the adapter may be connected to or integrated within a router of a local area network (LAN), such as a home router, allowing the local router to serve multiple devices within local area network (e.g., a home network). The adapter may be in form of a dongle with a connector to connect to the router.

The adapter may generate a single content encryption key per content and per client device. Alternatively, the adapter may generate a single content encryption key per content for multiple client devices, optimizing performance while maintaining security.

In some cases, the multicast content may be already encrypted in a DRM-compatible format. In such situations, the adapter may not need to decrypt and re-encrypt the content, but instead focus on converting the transmission method and ensuring integrity in transmission of content-related information such as content usage rules.

The present system enables broader access to protected content across a variety of devices and network configurations, while maintaining the content protection measures and providing end-to-end security.

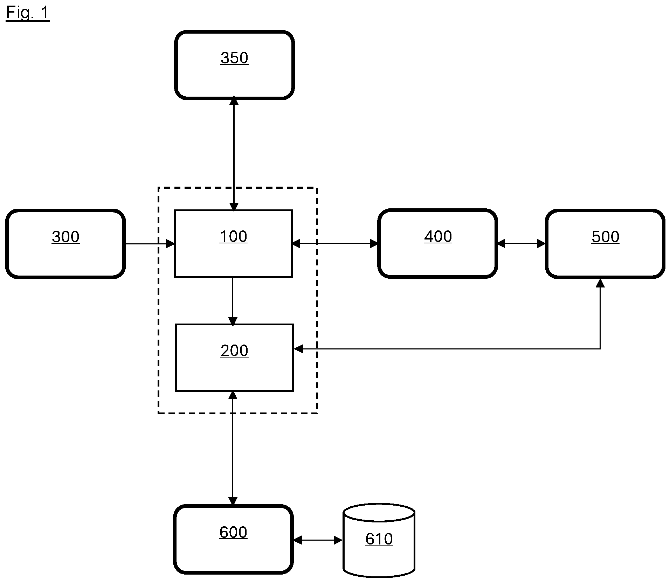

FIG. 1 illustrates a block diagram of a system for transitioning from multicast to unicast for content delivery. In an embodiment, the system includes an adapter module 100, a user device 200, a multicast content provider 300, a CAS Head-End server 350, a DRM server 500, an entity 400 associated with the DRM server, and an authorization service provider 600.

The content provider 300 is responsible for transmitting scrambled (encrypted) multicast contents to a plurality of devices. A Content Access System (CAS) or similar technology ensures that only authorized devices can decrypt and access the content.

Typically, in the CAS, Entitlement Control Messages (ECMs) containing control words necessary to decrypt the encrypted content are transmitted alongside the content in a multicast stream. Devices use ECMs to retrieve the control words needed for decryption. Furthermore, Entitlement Management Messages (EMMs) carry user-specific or group-specific authorization data (i.e., access rights), indicating which services or content a user or a group of users is entitled to access. These messages EMMs are sent to individual devices or groups of devices and are used to manage subscriptions and access rights. The EMMs may be generated and transmitted by another component of the CAS, for example the CAS Head-End server 350.

The adapter module 100 is configured to receive an encrypted multicast content from the content provider 300 through a network infrastructure such as cable, satellite, or internet.

The adapter module 100 may also be configured to receive the EMMs from the CAS Head-End server 350 through a network. In an embodiment, it may include a smart card or embedded security module configured to process the EMMs to determine user entitlements and use the ECMs to obtain the control words necessary for decrypting the multicast content, as will be described later in more detail.

The adapter module 100 may be in communication with one or more user or client devices 200 (e.g., computer, smartphone, tablet, IoT device, smart TV, etc.) through wireless or wired communication channels. For the sake of clarity, only one device 200 is represented in FIG. 1. The adapter module 100 is responsible for unicast transmission of content, that was received through multicast transmission, to a recipient device from the devices 200.

In FIG. 1, the adapter module 100 and device 200 are shown enclosed within a dashed line box, indicating they may be located within a same local environment or network. As an example, the adapter module 100 and the device 200 may be connected to a local area network (LAN), such as a home network. The device 200 may be a computer, a smart-phone, a tablet, an IoT device or any other communication device. Multiple devices similar to the user device 200 may be connected to the LAN.

In some implementations, the adapter module 100 may be connected to or integrated in a router of the local area network (LAN).

The adapter module 100 is further configured to communicate with the entity 400, associated with the DRM server 500, to be provided with protection or security information. The adapter module 100 is configured to generate a content key token CKT and, using the protection information, to protect in confidentiality, authenticity (or at least integrity), or both, the content key token CEK or part(s) of the content key token CEK. This content key token CKT contains at least one content encryption key CEK, that is used for encrypting the content for unicast transmission to the device 200. It may include other information (e.g., content ID, usage rules, etc.) related to the content, as will be explained later.

The entity 400 may establish a secure communication channel with the DRM server 500. This secure channel can be implemented using standard cryptographic protocols to ensure confidentiality, authenticity and integrity of the transmitted information. In another implementation, the entity 400 may be implemented as a component within the DRM server 500.

The entity 400 has the function of providing protection information to the adapter module 100. In an embodiment, it is configured to authenticate the adapter module 100 and establish a secure communication channel with the adapter module 100 to ensure the authenticity and confidentiality of the data, including the protection information, exchanged between the entity 400 and the adapter module 100. The authentication mechanism and secure channel establishment may utilize known cryptographic protocols.

In another embodiment, the entity 400 may be divided into two separate entities that can exchange information securely: a first entity responsible for authenticating the adapter module 100, and a second entity responsible for securely providing the protection information to the adapter module 100.

The entity 400 is also configured to transmit to the DRM server 500 protection information enabling the DRM server 500 to process the content key token CKT generated by the adapter module 100 and received via the device 200, to issue a license containing the content encryption key CEK, as will be explained later.

The device 200 is configured to communicate with the authorization service provider 600 for authorization purposes and with the DRM server 500 to obtain licenses.

The authorization service provider 600 is configured to receive, from the device 200, a request to obtain authorization for a content. The request may include the content key token. The authorization service provider 600 is further configured to check the user's entitlement or authorization data stored in the user database 610. If the check is positive, the authorization service provider 600 is configured to generate a content authorization token and transmit the content authorization token to the user device 200.

In an embodiment, the authorization service provider 600 may extract content-related information from the content key token CKT received from the user device 200 (e.g., content usage rules), and incorporate it in the content authorization token CAT.

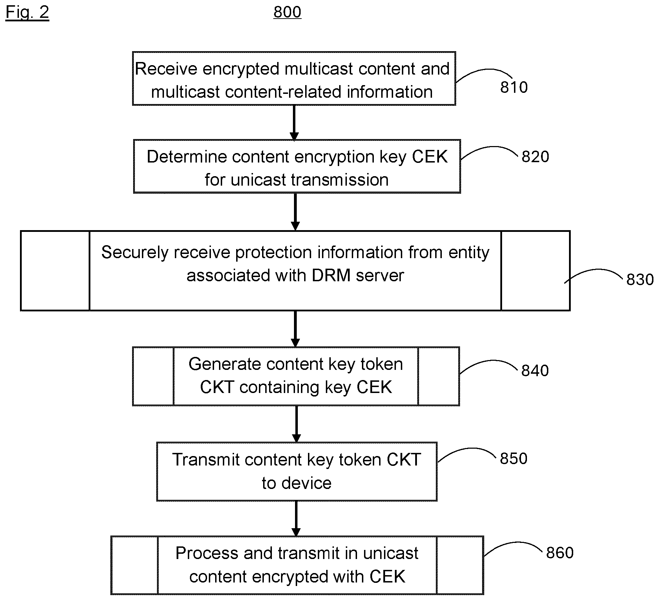

FIG. 2 illustrates a method of multicast to unicast conversion or transition 800 performed by the adapter module 100. The method 800 includes several steps for processing and transmitting an encrypted content received in multicast to a user device 200 through unicast transmission or streaming.

The following steps 810 to 860 may be performed by the adapter module 100 in response to a request for the content from the user device 200. Alternatively, it may be initiated by the adapter module 100 based on predetermined criteria.

In a step 810, the adapter module 100 receives the multicast content from the multicast content provider 300. The multicast content may be transmitted through various network infrastructures such as cable, satellite, or internet. It may be encrypted.

In an implementation where the multicast content is protected using a content protection system like a CAS, Entitlement Control Messages (ECMs) containing control words necessary to decrypt the encrypted content are received by the adapter module 100 alongside the content in a multicast stream. In addition, EMMs indicating which services or content the user is entitled to access are received by the adapter module 100 for example from the CAS Head-End server 350.

In the step 810, the adapter module 100 may receive content-related information such as a content identifier, content usage rules defining conditions under which the content can be accessed and/or used, or any other information or parameter related to the multicast content. The content-related information may be received along with the encrypted multicast content in the multicast stream.

In a step 820, the adapter module 100 determines at least one content encryption key CEK. The content encryption key CEK represents a key used for encrypting the content for unicast transmission. In an embodiment, the content encryption key CEK is different from the content key(s) (e.g., control words) used to encrypt the multicast content. It may be generated by the adapter module 100 for example using a random generator.

The adapter module 100 may generate a single, specific, content encryption key CEK per content and per device 200.

Alternatively, it may generate a single content encryption key CEK per content for multiple devices 200, which can enhance performance by reducing computational resource usage.

In another implementation, the multicast content is already DRM-protected. The adapter module 100 may obtain the content key used to encrypt the multicast content, or data embedding this content key, and use it as the content encryption key CEK for unicast transmission.

The method 800 then proceeds to a process of authentication and reception of protection information 830. During this process 830, the adapter module 100 securely receives protection information from the entity 400 associated with the DRM server 500.

The protection information, or security data, is used to protect in confidentiality, authenticity (or at least in integrity), or both, at least part(s) of a content key token CKT that will be generated later in the method. This protection information may include at least one cryptographic key. In an embodiment, the protection information includes two different cryptographic keys: a first key used for encryption and a second key used for signature. In a first implementation, the first key may be a public key of a first pair of public and private asymmetric keys, and the second key may be a private key of a second pair of public and private asymmetric keys, distinct from the first pair of keys. In a second implementation, the first key and the second key may be two symmetric keys (i.e., a first symmetric key for encryption and second symmetric key for signature), different from one another. In other implementations, the protection information may utilize any other asymmetric cryptographic scheme, symmetric cryptographic scheme or mix of symmetric and asymmetric cryptographic schemes (e.g., in a third implementation, the protection information may include a first symmetric key for encryption and a second asymmetric private key for signature).

However, the present disclosure is not limited to these specific implementations of protection information. The protection information is designed to ensure the confidentiality, authenticity (or at least integrity), or both, of at least part of a content key token (CKT) that will be generated later in the method. It may be based on standard cryptographic techniques (e.g., symmetric or asymmetric cryptography) but can also utilize other cryptographic approaches, including post-quantum cryptography.

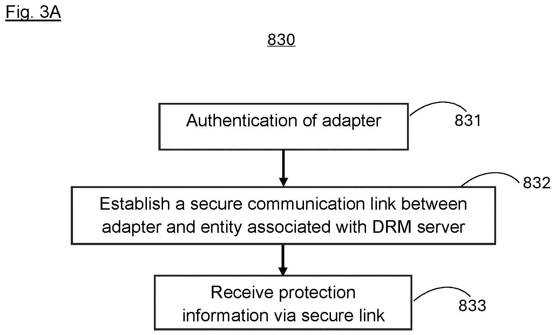

With reference to FIG. 3A, the process of authentication and reception of protection information 830 includes several steps to ensure secure communication between the adapter module 100 and the entity 400 associated with the DRM server 500.

In a step 831, the adapter module 100 performs an authentication process. In an embodiment, the authentication of the adapter module 100 may utilize one or more pre-shared secret keys stored in the adapter module 100, for example in a chipset. Alternatively, the adapter module 100 may be provisioned with a private key and an associated public key certificate, and use asymmetric cryptography with its private key and public key certificate for authentication, in a known manner. Other suitable authentication mechanisms may be employed to perform authentication of the adapter module 100.

Following successful authentication, in a step 832, a secure communication link is established between the adapter module 100 and the entity 400. This secure link ensures that subsequent data exchanges are protected from unauthorized access or tampering. For example, the adapter module 100 and the entity 400 may use a Diffie-Hellman key exchange process to generate a shared session key for securing the communication link.

In a step 833, the adapter module 100 receives the protection information via the established secure communication link. This protection information provided to the adapter 100 may be referred to as the "adapter protection information".

The DRM server 500 is provided by the entity 400 with protection information enabling the server 500 to process the content key token CKT, specifically to check its authenticity and access its confidential data. The protection information provided to the DRM server 500 may be referred to as the "server protection information". In the first implementation where the adapter protection information includes a first public key for encryption and a second private key for signature, the server protection information includes the first private key, associated with the first public key, and the second public key or its public certificate, associated with second private key. In the second implementation where the adapter protection information includes a first symmetric key for encryption and a second symmetric key for signature, the server protection information include this first symmetric key for encryption and this second symmetric key for signature. In the third implementation where the adapter protection information includes a first symmetric key for encryption and a second private key for signature, the server protection information includes the first symmetric key and the second public key or its public certificate, associated with this second private key.

By implementing these authentication and secure communication steps 831-833, the process 830 ensures that only the authorized adapter module 100 can securely receive the adapter protection information, which contributes to the integrity and security of the content distribution system.

In a step 840, the adapter module 100 generates the content key token CKT containing the content encryption key CEK. The adapter module 100 uses the protection information received in the process 830 to protect the confidentiality, authenticity, or both, of the content key token CKT or part(s) of the content key token. The content key token may include at least part of the multicast content-related information received in step 810.

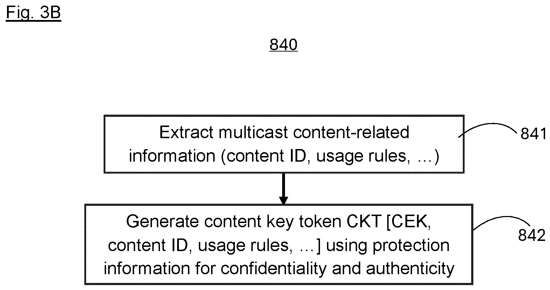

With reference to FIG. 3B, step 840 of generating the content key token CKT may include two sub-steps.

In step 841, the adapter module 100 may extract the content-related information from the multicast stream received in step 810. This content-related information may include a content identifier (content ID) and usage rules associated with the content in multicast.

In step 842, the adapter module 100 generates the content key token CKT. The content key token CKT includes the content encryption key CEK, and optionally the content-related information extracted in step 841. Optionally, the content-related information extracted in step 841 may be processed and modified by the adapter 100, prior to being inserted in the Content Key Token (CTK). The adapter module 100 uses the adapter protection information received from the entity 400 in step 833 to protect at least part(s) of the content key token CKT in confidentiality, authenticity, or both.

In an implementation, at least the content encryption key CEK is protected in confidentiality. In another implementation, both the content encryption key CEK and at least part of the content-related information (e.g., the usage rules) are protected in confidentiality. This protection in confidentiality is typically achieved through encryption, for example using the first key included in the adapter protection information.

The content-related information may be partially or fully non protected. This information may be in plaintext or have portions (e.g., the content identifier and/or the usage rules) that are unencrypted.

In an implementation, the content key token CKT is partially or fully protected in authenticity. This protection in authenticity can be achieved by signing the data, for example using the second key included in the adapter protection information. For example, data of the content key token CKT, including the encrypted content encryption key CEK, and the content-related information (e.g., content ID, usage rules, etc.) that may be unencrypted or at least partially encrypted, may be signed.

The extent and nature of protection (confidentiality, authenticity, or both) applied to the content key token CKT may vary depending on specific security requirements of the system.

In some implementations, the step 820 may include the determination of a plurality of content encryption keys for unicast transmission of the content. For example, the adapter module 100 may generate several content keys for the received multicast content. In that case, the plurality of content encryption keys may be included in the same content key token CKT in the step 840. Alternatively, the plurality of content encryption keys may be included in different content key tokens.

In a step 850, the adapter module 100 transmits the content key token CKT to the user device 200. This transmission enables the user device 200 to request a DRM license including the content encryption key CEK from the DRM server 500, as will be described later in more detail.

Finally, in a step 860, the adapter module 100 transmits in unicast the content, encrypted with the content encryption key CEK, to the user device 200.

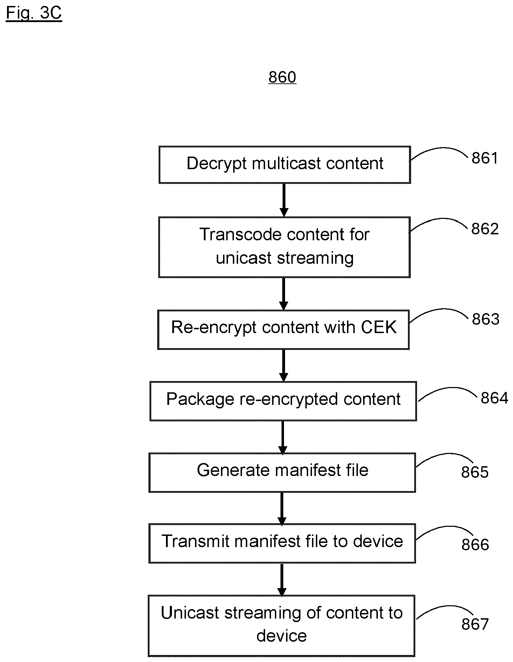

The process of unicast transmission of content to the device 200, represented by step 860 in FIG. 2, is illustrated in more detail in FIG. 3C. This process may include the following detailed steps performed by the adapter module 100:

In a step 861, the adapter module 100 may decrypt the multicast content that was received in encrypted form. In an embodiment, this decryption is performed using the content key(s), such as the control words obtained from the Entitlement Control Messages (ECMs) received alongside the encrypted multicast content.

Following decryption, in step 862, the adapter module 100 may transcode the content for unicast streaming. This transcoding process may involve any appropriate operation for converting the content from a format used in multicast to a format suitable for unicast transmission. For example, the step 862 may comprise:
- converting the content from a DVB (Digital Video Broadcasting) compliant format to another format compliant with DASH (Dynamic Adaptive Streaming over HTTP) or with another unicast streaming protocol, and
- segmenting or splitting the content into smaller chunks or segments for unicast streaming.

In step 863, the adapter module 100 may re-encrypt the transcoded content using the content encryption key CEK. This re-encryption ensures that the content remains protected during unicast transmission to the user device 200.

In an embodiment where the multicast content is already DRM-protected and encrypted with the content encryption key CEK, the adapter module 100 does not need to decrypt and re-encrypt the content for unicast transmission.

Then, in a step 864, the adapter module 100 may perform a packaging of the content. This packaging process prepares the content for transmission over the network, typically by wrapping the encrypted segments or chunks in a streaming or container format like CMAF, MP4, or TS.

In a step 865, the adapter module 100 generates a manifest file for the content. This manifest file contains metadata about the content, including information about locations of the content segments, for example in memory of the adapter module 100, and optionally available quality levels and bit rates. The manifest file is intended to be used by the client device 200 to request the appropriate content segments and perform adaptive bitrate streaming based on network conditions and device capabilities.

In a step 866, the adapter module 100 transmits the manifest file to the user device 200. The adapter module 100 acts a local CDN (Content Delivery Network) or a local streaming server.

The device 200 detects this local CDN or streaming server 100. When the device 200 initiates a content playback request (e.g., upon a playback command entered by a user), the device 200 sends a request to the adapter module 100 acting as a local streaming service or CDN and, in response, receives the manifest from the adapter module 100. The adapter module 100 acts as a streaming server and the device 200 act as a client.

Finally, in a step 867, the adapter module 100 performs the unicast streaming of the content to the user device 200. This streaming process involves sending the packaged, encrypted content segments to the user device 200 in response to requests from the device 200, for example using a protocol such as HTTP or HTTPS.

The method of multicast to unicast conversion 800 achieves the conversion of the content from multicast to unicast, which may comprise converting at least one of : a content delivery protocol, a content delivery format, a content encryption key, and a content encryption algorithm.

The adapter module 100 converts the multicast content for unicast transmission while maintaining end-to-end security for content access and usage. The protection of the content remains substantially equivalent before and after the conversion.

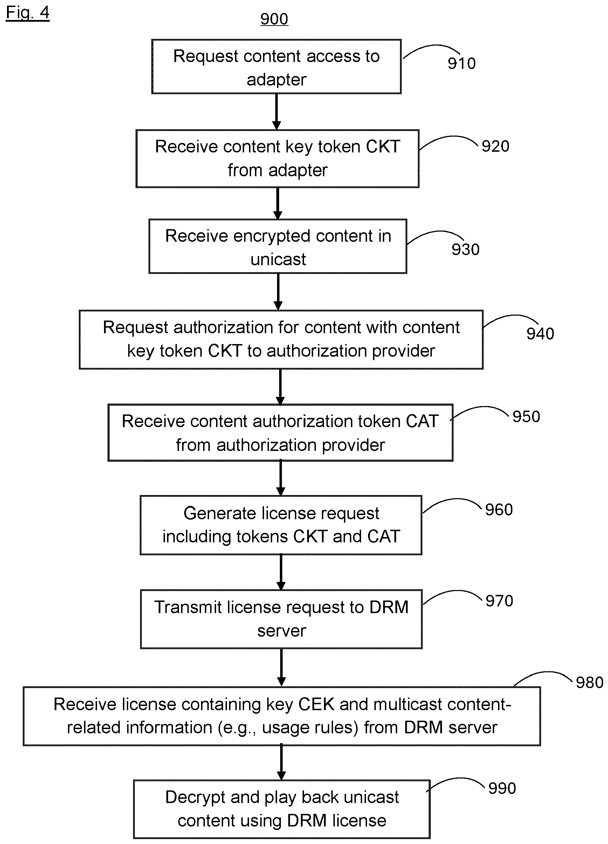

FIG. 4 illustrates a method 900 for receiving and playing back the content that has been converted from multicast to unicast transmission. This method 900 may include the following steps performed by the receiver device 200:

In a step 910, the device 200 may transmit a request (RQ1) for the content to the adapter module 100. This request initiates the process of receiving unicast content from the adapter module 100.

Following the content request, in a step 920, the device 200 receives the content key token CKT from the adapter module 100, as previously described. This content key token CKT contains the content encryption key CEK used to encrypt the unicast content and optionally multicast content-related information (e.g., content ID, usage rules, etc.)

In a step 930, the device 200 receives the encrypted content in unicast mode from the adapter module 100. This encrypted content corresponds to the content that was originally transmitted in multicast mode and has been converted by the adapter module 100 for unicast transmission.

The method 900 further includes a step 940, where the device 200 connects to the authorization service provider 600 to request (RQ2) authorization for the content.

The authorization service may be provided by a component of the system such as an operator's portal or platform, the DRM server 500, or any other entity responsible for managing user accounts and authorization data such as access rights and subscriptions.

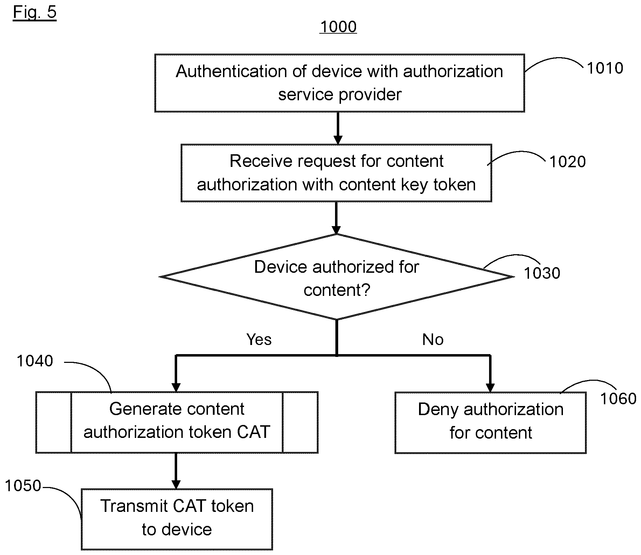

FIG. 5 illustrates a method 1000 for processing the content authorization request, according to an embodiment. The method 1000 includes several steps performed by the authorization service provider 600 to verify authorization and generate a content authorization token for the user device 200.

In a step 1010, the authorization service provider 600 performs authentication of the user device 200. This authentication may involve verifying user credentials, device identifier, or other authentication data provided by the user device 200.

Following authentication, in a step 1020, the authorization service provider 600 receives the request for content authorization from the user device 200. This request may include the content key token CKT previously received by the user device 200 from the adapter module 100.

The method 1000 then proceeds to a step 1030, where the authorization service provider 600 determines if the user device 200 is authorized to access the requested content. The authorization service provider 600 checks the user's authorization data stored in a user database 610 to make this determination. The user database 610 may contain information about user subscriptions, access rights, a list of authorized devices for that user account and/or any other relevant authorization data.

Based on the determination made in step 1030, the method 1000 proceeds as follows:

If the user device 200 is not authorized to access the content (No path), the method 1000 proceeds to a step 1060, where the authorization service provider 600 denies authorization for the content. In this case, the authorization service provider 600 may send a message to the user device 200 indicating that access to the requested content has been denied.

If the user device 200 is authorized to access the content (Yes path), the method 1000 proceeds to a step 1040, where the authorization service provider 600 generates a content authorization token CAT. The content authorization token CAT serves as a digital credential verifying the user device's 200 right to access the requested content.

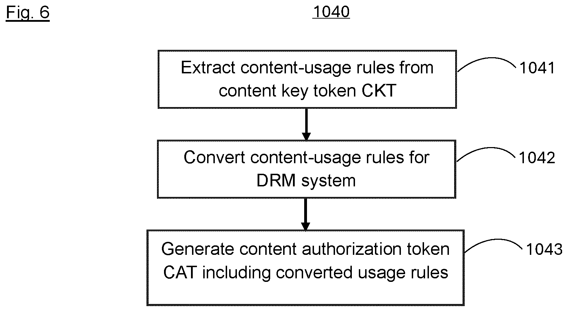

FIG. 6 illustrates a flowchart detailing step 1040 for generating a content authorization token, according to an embodiment. The step 1040 includes several sub-steps for processing content-related information like usage rules and generating an authorization token.

The step 1040 begins with a step 1041, where at least part of the multicast content-related information (e.g., usage rules) are extracted from the content key token CKT.

Before the multicast content-related information from the content key token CKT is encrypted, it may be necessary to decrypt it. For that purpose, the server protection information may be securely provided to the authorization service provider 600 by the DRM server 500 or the associated entity 400, and used to decrypt the content-related information.

In a step 1042, the extracted content related information, such as the content-usage rules, may be converted for compatibility with a DRM system. This conversion may involve translating the rules into a format or syntax that is compatible with the specific DRM system being used.

Finally, in a step 1043, the content authorization token CAT is generated. This content authorization token CAT may include the usage rules (if needed, converted) and/or any other multicast content-related information extracted, obtained from the content key token CKT (and, if needed, converted). The content authorization token CAT may include additional information such as the user's identity, the content identifier, specific permission or restriction data associated with content access or use, a timestamp, and an expiration date. The authorization service provider 600 digitally signs the content authorization token CAT, or at least part of it, to prevent tampering and ensure authenticity.

By following these steps, the authorization service provider 600 generates a content authorization token CAT incorporating usage rules or other multicast content-related information in a format compatible with the DRM system. This enables transferring the content-related information, particularly the usage rules, derived from the multicast system to the unicast system while maintaining content protection measures.

In another embodiment, the authorization service provider 600 may obtain DRM specific information on usage rules for the content, for example from a content database, and incorporate this DRM specific information on usage rules in the content authorization token, instead of or in addition to the usage rules associated with the multicast content.

After generating the content authorization token CAT, the method 1000 continues to a step 1050, where the authorization service provider 600 transmits the content authorization token CAT to the user device 200, in response to the request (RQ2) sent in the step 940.

By following this method 1000, the authorization service provider 600 ensures that only authorized user devices 200 receive the necessary content authorization token CAT to proceed with accessing the requested content, while maintaining the integrity of the content usage rules.

In a step 950, the device 200 receives the content authorization token CAT from the authorization service provider 600.

Then, in a step 960, the user device 200 generates a license request (RQ3). This license request (RQ3) may include both the content key token CKT and the content authorization token CAT.

In a step 970, the user device 200 transmits the license request (RQ3) to the DRM server 500. The device 200 authenticates with the DRM server 500. For that purpose, the license request (RQ3) may contain a DRM device certificate chain which is validated by the DRM server 500 to authenticate the device. Any other authentication method may be used.

The content authorization token CAT included in the license request allows the DRM server 500 to verify the user's authorization without needing to repeatedly check the user database 610, in a known manner.

In the present disclosure, the DRM server 500 verifies the authenticity of the content key token CKT and accesses the confidential data included in the content key token CKT, using the server protection information. In some implementations, this is typically accomplished by checking the digital signature of the token CKT and decrypting the encrypted data of the token CKT using the appropriate keys included in the server protection information. The decrypted data includes the content encryption key CEK. In an implementation, the DRM server 500 may use the second public key to verify the digital signature and the first private key to decrypt the encrypted data. These steps allow the DRM server 500 to confirm that the content key token CKT has not been modified during transmission and verify the identity of the sender of the content key token CKT, namely the adapter module 100. Then, the DRM server 500 issues or generates the requested license.

This DRM license includes the content encryption key CEK, which is necessary for decrypting the received unicast content, and usage information or data. The usage data defines conditions under which the content can be accessed and used (e.g., playback time, number of devices, usage restriction to authorized user(s) or device(s), expiration time information specifying when access to content expires) etc.).

In an embodiment, the usage data of the DRM license comprises the usage rules and/or any other relevant data extracted from the content authorization token CAT. As previously explained, content-related information such as usage rules may be embedded in the content key token CKT and then transferred in the content authorization token CAT, if necessary after conversion (e.g., format conversion) for compatibility with the DRM system, before the token CAT is sent to the DRM server 500 as part of (or along with) the DRM license request. By following these steps, content-related information, particularly usage rules, from the multicast system can be transferred to the unicast and DRM system. In this way, at least part of this usage data may be securely transferred from the multicast stream to the unicast and DRM system through the content key token CKT and the content authorization token CAT.

In another embodiment, usage data may be extracted by the DRM server 500 from the content key token CKT.

In a step 980, the user device 200 receives the DRM license from the DRM server 500.

Finally, in a step 990, the user device 200 plays back the unicast content using the received DRM license. This step involves decrypting the content using the content encryption key CEK included in the DRM license and rendering the decrypted content in compliance with the access and usage data included in the DRM license.

By following this method of unicast reception and playback 900, the user device 200 can securely receive, decrypt, and play back the content that has been converted from multicast to unicast transmission, while ensuring proper authorization and content protection based on a DRM system.

By following this method of multicast to unicast conversion 800, the system enables the secure transition of content from a multicast format to a unicast format, allowing devices that may not be equipped to handle multicast transmissions to receive and access the content while maintaining robust content protection measures.

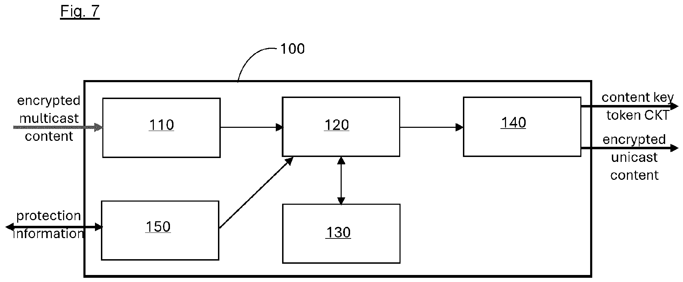

FIG. 7 illustrates a block diagram of the adapter module 100 for converting multicast content to unicast content while maintaining content protection measures. It is implemented with hardware and software components configured to perform the various functions of the adapter module 100. In an embodiment, the adapter module 100 includes a receiver 110, a processing system 120, a memory 130, a transmitter 140, and a communication interface 150. The receiver 110, the memory 130, the transmitter 140 and the communication interface 150 may be connected to the processing system 120 that is responsible for controlling these components.

The receiver 110 is configured to receive encrypted multicast content from the multicast content provider 300. The receiver 110 may be implemented as a first network or communication interface capable of receiving data through various network infrastructures such as cable, satellite, or internet.

The processing system 120 may be implemented with hardware and software components. The processing system 120 may include one or more processing environments, secure and on-secure, operating on at least one processor. The processing system 120 is configured to handle operations of the adapter 100. The sensitive operations (e.g., content decryption, re-encryption, signature and generation of security tokens) may be handled by one or more secure processing environments. The multiple processing environment may be separate. The processing system 120 may have any suitable implementation to handle the different operations of the adapter 100.

The memory 130 stores data and instructions for the operation of the adapter module 100. The memory 130 may include both volatile and non-volatile memory components, and may store the instructions that, when executed by the processing system 120, cause the processing system 120 to perform the various functions of the adapter module 100.

The processing system 120 is configured to securely receive protection information from the authentication entity 400 that is associated with the DRM server 500, via the communication interface 150, through a network (e.g., internet). The processing system 120 is also configured to generate a content key token CKT containing at least one content encryption key CEK for encrypting the content for unicast transmission, using the protection information to protect in confidentiality and in authenticity at least part of the content key token. In some implementations, the processing system 120 is configured to generate the content encryption key CEK.

The transmitter 140 is configured to transmit both the content key token and the encrypted unicast content. The transmitter 140 is responsible for transmitting the content key token CKT to the user device 200, enabling the user device 200 to request a DRM license including the content encryption key CEK from the DRM server 500. The transmitter 140 is also responsible for transmitting the encrypted unicast content to the user device 200 through unicast transmission. The transmitter 140 may be implemented as a network or communication interface capable of transmitting data using a unicast communication method, for example through the local area network LAN previously described.

The adapter module 100 may be configured to perform the method of multicast to unicast conversion 800 as previously described. The processing system 120 may execute the steps of the method 800, including receiving the encrypted multicast content through the receiver 110, performing the process of authentication and reception of protection information 830, generating the content key token, and controlling the transmitter 140 to transmit the content key token and the encrypted unicast content to the user device 200.

In an embodiment, the adapter 100 may be implemented as a system including different interconnected components respectively configured to perform the different function of the adapter module 100.

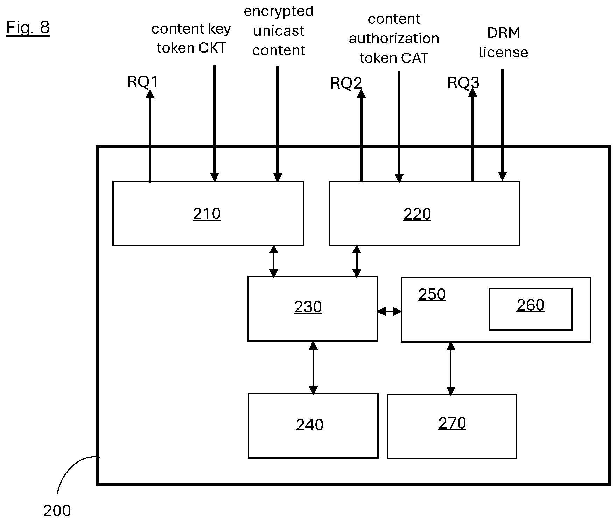

FIG. 8 illustrates a block diagram of the user device 200, according to an embodiment. The user device 200 includes several interconnected components : a first communication interface 210, a second communication interface 220, a processor 230, a memory 240, a playback module or player 250, a content decryption module (CDM) 260, and an IHM 270.

The first communication interface 210 is configured to communicate with the adapter module 100. In operation, it transmits a content request (RQ1) to the adapter module 100 and receives a content key token and encrypted unicast content in response. The first interface may communicate wirelessly or via wired connection through the local area network, e.g. home network, previously described.

The second communication interface 220 is configured to communicate with the DRM server 500 and with the authorization service provider 600 through a network, for example internet. In operation, it transmits an authorization request RQ2 to the authorization service provider 600 and a license request RQ3 to the DRM server 500, and receives a content authorization token from the authorization service provider 600 and a DRM license from the DRM server 500 in response. The second interface may communicate wirelessly or via wired connection through the network, e.g. internet.

The processor 230 is connected to both the first communication interface 210 and the second communication interface 220, as well as to the memory 240, the playback module 250, and the IHM 270. The processor 230 controls the operation of the user device 200.

The memory 240 stores data and instructions for the operation of the user device 200.

The playback module 250, also referred as a player component, handles content playback or rendering functions. The content decryption module 260, also referred as a DRM client module, is connected to or integrated in the playback module 250 and processes DRM-related operations. The module 260 may be responsible for managing the DRM license. In operation, the playback module 250 cooperates with the DRM client module 260 to decrypt and render the received encrypted unicast content using the DRM license obtained from the DRM server 500.

The IHM 270 provides an interface for content playback and user interaction. The IHM 270 may include display components for rendering the content and input components for receiving user commands related to content playback.

The device 200 may be configured to perform the method of unicast reception and play back 900 as previously described. The processor 230 may execute the steps of the method 900, including transmitting the content request (RQ1) through the first communication interface 210, receiving the content key token and encrypted unicast content, transmitting the authorization request RQ2 and license request RQ3 through the second communication interface 220, and controlling the playback module 250 to play back the unicast content using the received DRM license.

The systems and methods described herein may be implemented in any form of computing or electronic device. The term "computer," as used herein, encompasses any device with processing capabilities sufficient to execute instructions. This includes, but is not limited to, personal computers, servers, mobile devices, personal digital assistants, and similar devices.

Such devices may include one or more processors, such as microprocessors, controllers, or other suitable types of processors, capable of executing instructions to control the device's operation. For example, in some implementations using a system-on-a-chip architecture, the processors may include fixed-function blocks (hardware accelerators) that perform parts of the method in hardware rather than software or firmware. Platform software, such as an operating system or similar, may be installed to support the execution of application software.

The described functionality may be implemented in hardware, software, or any combination thereof. When implemented in software, the instructions or code can be stored on or transmitted via a computer-readable medium. Such media include computer-readable storage media, which may be volatile or non-volatile, removable or non-removable, and implemented using any technology for storing information such as program code, data structures, or other data. Examples include, but are not limited to, ROM, EEPROM, RAM, magnetic or optical storage, flash memory, or any other storage medium accessible by a computer. Communication media that facilitate the transfer of software, such as via coaxial cables, fiber optics, DSL, or wireless signals, may also be considered part of computer-readable media.

Alternatively, or in addition, some or all of the described functionality may be implemented using hardware logic components. Examples include, but are not limited to, application-specific integrated circuits, system-on-a-chip systems, field-programmable gate arrays, application-specific standard products, and complex programmable logic devices. In some cases, software instructions may also be implemented in dedicated circuits, such as programmable logic arrays or digital signal processors.

The computing device may operate as a standalone system or as part of a distributed system, where tasks are performed collectively by multiple devices connected via a network. Such devices may communicate over a network connection to perform the described functionality. For instance, software may be stored on a remote computer and accessed by a local device, which may download and execute portions of the software as needed. Similarly, some instructions may be processed locally, while others may execute on remote systems or networks. In some cases, the computing device may be remote and accessible via a communication interface. Storage of program instructions may also be distributed across a network or stored in a combination of local and remote locations. For example, software may reside on a remote computer and be accessed by a local terminal, or the system may execute some software locally while other components operate on remote servers.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognize that numerous further modifications and combinations of various aspects are possible. Accordingly, the described aspects are intended to encompass all such alterations, modifications, and variations that fall within the scope of the appended claims.

## Claims

1. A method for unicast transmission of an encrypted multicast content, said method comprising the steps, performed by an adapter (100), of
- receiving (810) the encrypted multicast content;
- securely receiving (830) protection information from an entity (400) associated with a DRM server (500);
- generating (840) a content key token containing at least one content encryption key CEK, using the protection information to protect at least one part of the content key token in confidentiality, authenticity, or both;
- transmitting (850) the content key token to a device (200), enabling said device (200) to request a DRM license including said content encryption key CEK to the DRM server (500); and
- transmitting (860) in unicast the content encrypted with the content encryption key CEK to the device (200).

2. The method according to claim 1, further comprising receiving (810) multicast content-related information, and wherein, in the step (840) of generating the content key token, said multicast content-related information is included in the content key token.

3. The method according to claim 2, wherein the multicast content-related information includes content usage rules defining conditions under which the content can be accessed and used.

4. The method according to any of claims 1 to 3, further comprising a step (831) of authenticating the adapter (100) with the entity (400) associated with the DRM server (500) and a step (832) of establishing a secure communication link between the adapter (100) and said entity (400) associated with the DRM server (500), the protection information being transmitted through the established secure communication link.

5. The method according to any of claims 1 to 4, further comprises a step (820) of generating the content encryption key CEK, that is different from a content key used to encrypt the multicast content.

6. The method according to claim 5, further comprising a step (861) of decrypting the encrypted multicast content and a step (863) of re-encrypting the decrypted multicast content with the content encryption key CEK for unicast transmission.

7. The method according to any of claims 1 to 6, further comprising converting (862, 864) the content from a format used for multicast transmission to a format adapted for unicast transmission.

8. The method according to any of claims 1 to 7, wherein the protection information includes at least one cryptographic key.

9. A method of receiving an encrypted unicast content, said method comprising the steps, performed by a device (200), of:
- receiving (920, 930), from an adapter (100), the unicast content and a content key token, the unicast content being encrypted by at least one content encryption key CEK that is included in the content key token;
- generating (960) a license request including said content key token;
- transmitting (970) the license request to a DRM server (500);
- receiving (980) from the DRM server (500) the license including the content encryption key CEK;
- decrypting and rendering (990) the content using the received **DRM** license.

10. The method according to claim 9, further comprising the steps, performed by the device (200), of:
- transmitting the content key token (940) to an authorization service provider (600),
- in response, receiving a content authorization token ensuring that the device (200) is authorized to access said content,
wherein, in the step (960) of generating the license request, said content authorization token is included in the license request.

11. The method according to claim 10, wherein the authorization service provider (600) checks if the device (200) is authorized to access the content using a user database and, if the check is positive, generates the content authorization token.

12. The method according to claim 10 or 11, wherein, the content key token containing multicast content-related information, the authorization service provider (600) extracts said multicast content-related information from the content key token and includes the extracted information in the content authorization token.

13. An adapter device (100) comprising:
- a receiver (110) configured to receive an encrypted multicast content;
- a processing system (120);
- at least one memory (130) storing instructions that, when executed by the processing system (120), cause the processing system (120) to:
securely receive protection information from an entity (400) associated with a DRM server (500);
generate a content key token containing at least one content encryption key CEK, using the protection information to protect at least one part of the content key token in confidentiality, authenticity, or both; and
- a transmitter (140) configured to
transmit the content key token to a device (200), enabling said device (200) to request a DRM license including said content encryption key CEK to the DRM server (500); and
transmit in unicast the content encrypted with the content encryption key CEK to the device (200).

14. A device (200) comprising:
- a first communication interface (210) configured to receive, from an adapter, a unicast content and a content key token, the unicast content being encrypted with at least one content encryption key CEK that is included in the content key token;
- at least one processor (230);
- at least one memory (240) storing instructions that, when executed by the processor (230), cause the processor to
generate a license request including said content key token;
- a second communication interface (220) configured to transmit the license request to a DRM server (500) and receive from the DRM server (500) the license including the content encryption key CEK;
- a player (250, 260) configured to decrypt and render the content using the received DRM license.

15. A system comprising the adapter device (100) of claim 13, a DRM server (500) and an entity (400) associated with the DRM server (500) and configured to securely provide protection information to the adapter device (100).

16. The system of claim 15, further comprising an authorization service provider (600) configured to receive a content key token from a device (200), check if the device (200) is authorized to access the content and, if the check is positive, generate a content authorization token and transmit said content authorization token to the device (200).

17. The system of claim 16, wherein the authorization service provider (600) is configured to extract multicast content-related information from the content key token and to include the extracted information in the content authorization token.

18. The system of any of claims 15 to 17, further comprising at least one device (200) according to claim 14.

19. A computer program product comprising a non-transitory computer-readable medium storing instructions that, when executed by a processor of an adapter, cause the adapter to:
- receive an encrypted multicast content;
- securely receive protection information from an entity associated with a DRM server;
- generate a content key token containing at least one content encryption key CEK, using the protection information to protect at least one part of the content key token in confidentiality, authenticity, or both;
- transmit the content key token to a device, enabling said device to request a DRM license including said content encryption key CEK to the DRM server;
- transmit in unicast the content encrypted with the content encryption key CEK to the device.

20. A computer program product comprising a non-transitory computer-readable medium storing instructions that, when executed by a processor of a device, cause the device to:
- receive, from an adapter, the encrypted unicast content encrypted with at least one content encryption key CEK and a content key token, the content key token containing the content encryption key CEK;
- generate a license request including said content key token;
- transmit the license request to a DRM server;
- receive from the DRM server the license including the content encryption key CEK;
- decrypt and render the content using the received DRM license.
